# EUROPEAN PATENT APPLICATION

(11) **EP 4 686 514 A1**
(43) Date of publication of application: **04.02.2026**
(21) Application number: 25192323.1
(22) Date of filing: 29.07.2025
(51) Int. Cl.: B08B 9/049, B08B 9/055, F16L 55/28, F16L 55/30, F16L 101/12

(54) **IMPROVED CLEANING SYSTEM**

(30) Priority: 30.07.2024 IT 202400017683
(71) Applicant: NTA Technical Solutions S.r.l., 10138 Torino (TO) (IT)
(72) Inventor: Lamesta, Gerardo, 10138 Torino (IT); Lamesta, Federico, 10138 Torino (IT); Cosentino, Luigi, 10138 Torino (IT)
(74) Representative: Garavelli, Paolo

(57) **Abstract**

A cleaning system for internal cleaning of pipe walls, comprising: a pump unit (d) to pump out cleaning fluid; an electric motor (f) connected to the pump (d); a device (g) for regulating the speed of the pump (d), connected to the motor (f) for its control and for regulating the pump (d) so that it delivers water at a high pressure, and a low flow rate; a nozzle (g, 4) equipped with a rotating head driven into rotation by the aforementioned fluid; an air compressor (h, 7, 14) for supplying compressed air for operation and cleaning; a mobile structure (100) designed to support and transport the pump (d) equipped with the components (f, g, 4, h, 7, 14) and comprising a plurality of arms (2) arranged in a pantograph capable of positioning the cleaning jets equidistant from the walls of the pipes.

## Description

The present invention relates to an improved cleaning system, with features for its use in pipes subject to internal cleaning that are inaccessible by hand, with the possible presence of aggressive agents (such as stratified grease), equipped with a variable pressure and low flow rate pumping unit.

The invention will be described below with reference to a cleaning system, but it can be used, equally effectively, in similar or different fields, such as material removal, paint stripping, etc.

The variable pressure pump systems available on the market are designed to exploit the full power provided by a high-pressure pump, in terms of both pressure and flow rate. Furthermore, variable pressure water eliminates the need for acids or solvents for cleaning, resulting in environmental and economic benefits.

However, these systems are not satisfactory and have, among other things, the problem of having to use relatively low operating pressures, between 80 and 200 bar, and high water flow rates, between 30 and 90 liters per minute: these conditions place the cleaning operator in serious difficulty, forced to operate with violent jets and uncontrollable splashes of water at variable pressure.

High-pressure systems are also known, but they require the full power of the high-pressure pump to be exploited, in terms both of pressure and of flow rate. Furthermore, these systems, due to their design, are unable to reach the entire surface area on which they are used (for example, pipelines with changes in direction, slopes, and corners that cannot be reached with non-robotic methods).

Documents WO-A1-2024/023855, US-A1-2006/266134 e WO-A2-2009/019615 respectively disclose a cleaning system and two centering systems which, alone or in combination, are not suitable for obtaining the technical object of the present invention.

Object of the present invention is therefore solving the aforementioned prior art problems by providing an improved cleaning system equipped with a variable pressure, low flow rate pump unit, which allows the following improvements to be achieved:
- use the minimum water flow rate (2-4 l/min) necessary for industrial cleaning, material removal, paint stripping, etc., so as to minimize the environmental impact, in terms both of energy and of waste generation (contaminated water following its use) ;
- use a variable pressure range (from 0 to 500 bar), so as to make the pumping unit flexible in terms of its operating characteristics;
- can be easily transported in a van or similar small and easy-to-handle means of transport;
- can be easily moved around the workplace, inserted into pipes with small openings
- once inserted inside the duct, by means of an air pressure regulator which acts on a piston, an operator from his position can, by means of a pressure gauge present on an air compressor, check the consequent thrust exerted on an arm pantograph and thus regulate the adherence of the system to the walls of the ducts
- the operator has continuous and vigilant control over the situation that occurs in front of the probe inside the pipeline, via a video camera installed on board
- the advancement is electrically adjustable in a constant way from a console, so as to evaluate in real time the persistence of the cleaning action in that position
- the presence of a crown of high-pressure air jets keeps the area clear to facilitate control with the aforementioned video camera
- the lighting of the video recording area is supported by high-brightness, low-consumption LEDs, adjustable from the console.

The above and other objects and advantages of the invention, as will become apparent from the following description, are achieved with an improved cleaning system such as that described in claim **1.**

Preferred embodiments and non-trivial variants of the present invention form the subject matter of the dependent claims.

It is understood that all enclosed claims form an integral part of this specification.

It will be immediately obvious that countless variations and modifications can be made to what is described (for example relating to shape, dimensions, arrangements and parts with equivalent functionality) without departing from the scope of the invention as appears from the appended claims.

The present invention will be better described by some preferred embodiments thereof, provided for explanatory and non-limiting purposes, with reference to the attached drawings in which:

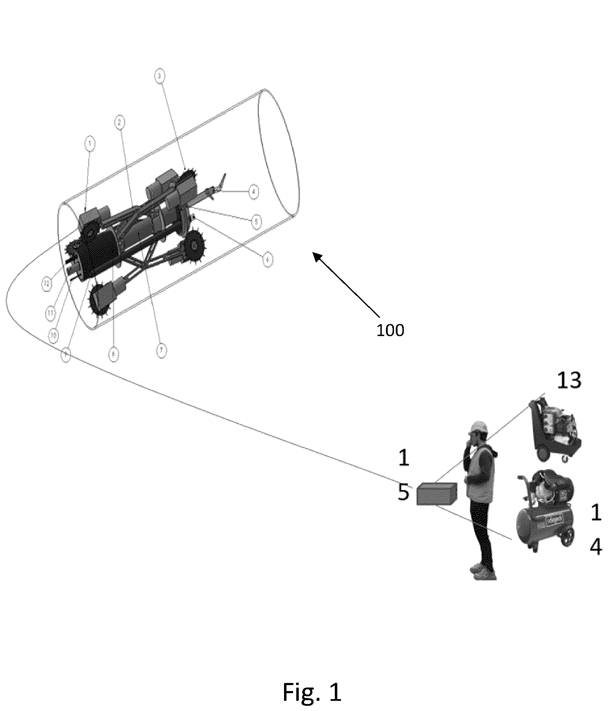

- FIG. 1 shows an axonometric view of one embodiment of the improved cleaning system according to the present invention;

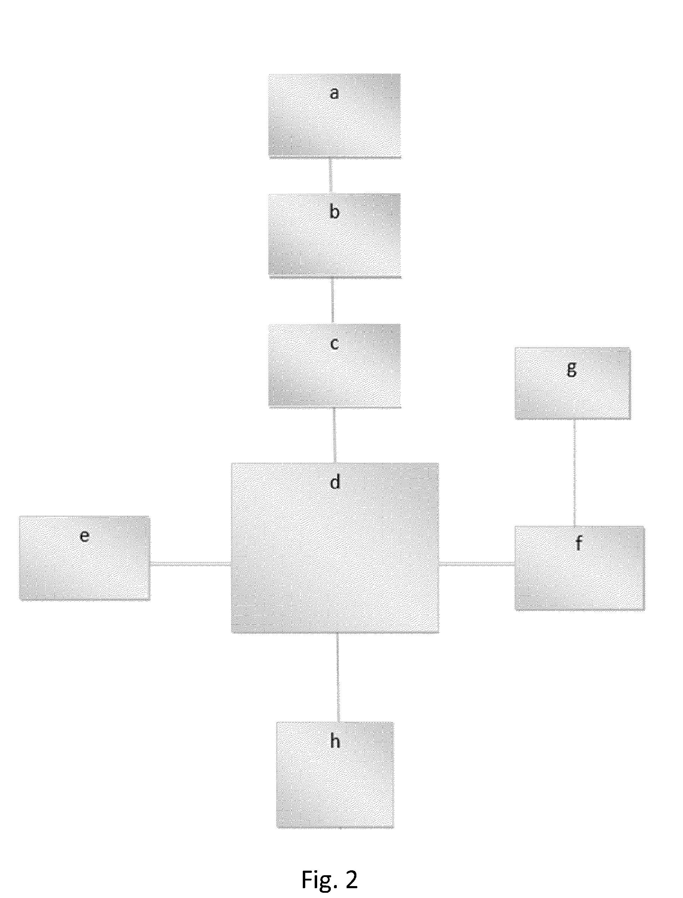

- FIG. 2 shows a block diagram of an embodiment of the variable pressure, low flow pump unit used for cleaning; and

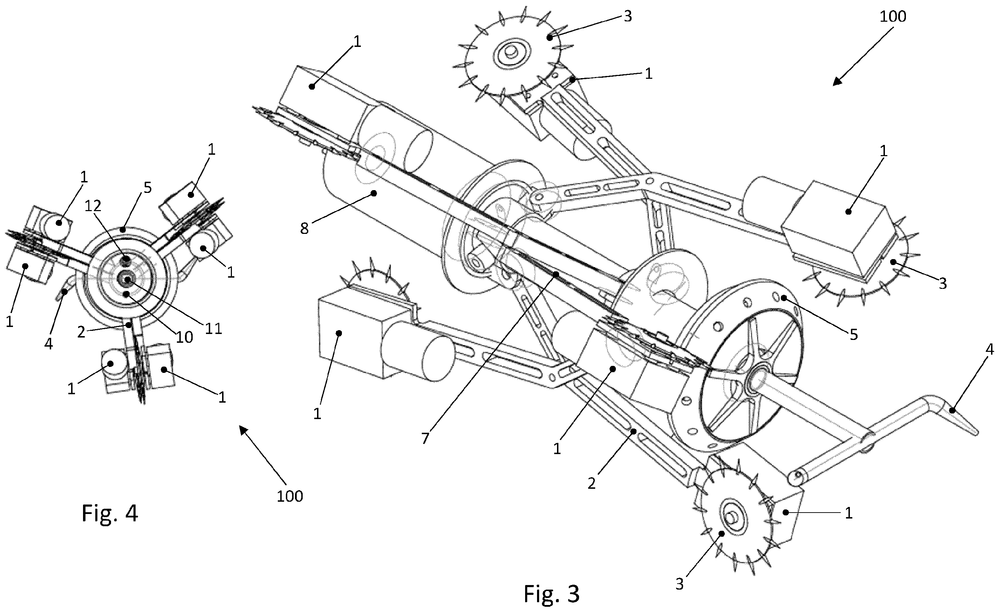

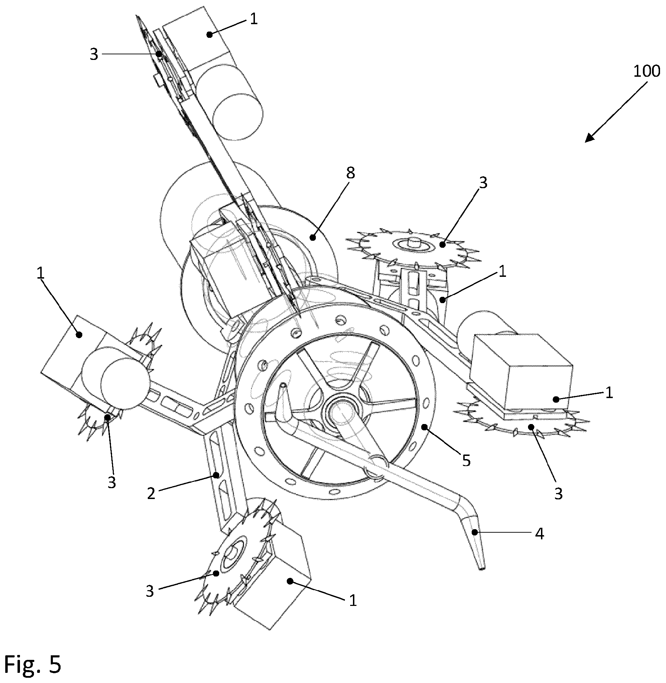

- FIG. 3 to 5 illustrate a further embodiment of a part of the cleaning system according to the present invention.

Referring to the Figures, to create the inventive system and achieve the above-mentioned objects, a shape was designed capable of inserting itself inside the pipes involved in the required activity, providing the cleaning action with the correct positioning in relation to the surface to be treated.

With this system, the operator can maintain a position protected from volatile substances inside the pipes, while at the same time having a view of the operation progress.

Unlike known systems with variable pressure pump units, the system according to the present invention aims to provide the minimum performance for carrying out processes (industrial cleaning, material removal activities, paint stripping, etc.) in order to use the least amount of water possible and exploit the high rotation speeds of the nozzles; furthermore, the system has the advantage of being able to reach any point inside pipes.

The inventive cleaning system 1 therefore comprises:
- at least one pumping unit or high-pressure pump, designed to pump out water or other similar fluids;
- at least one electric motor connected to the high-pressure pump for its operation;
- at least one pump speed regulation device, connected to the motor for its control and for regulating the pump so that it delivers fluid at high pressure, i.e. from 0 to 500 bar, and a low flow rate, from 2 to 4 l/min;
- at least one nozzle 4 equipped with at least one rotating head made to rotate by the exit of the high-pressure flow;
- at least one air compressor 7, 14 for controlling a pantograph 2 on board a probe, via a pneumatic piston 9
- the probe which transports the cleaning system inside the duct (not illustrated) through some gear wheels 3 connected to the arms 2 and controlled by respective electric motors 1 (preferably six as illustrated, but obviously a higher or lower number can also be used): its centering occurs automatically via arms 2, thus allowing the correct distance between the jet and the surface to be cleaned, while, in the front part, a crown 5 of air jets keeps the surface clear, allowing the operator, via a camera 6 located in the front part (with respect to the advancement direction of the cleaning system in the duct) to check and film/record the correct cleaning operation in order to provide a report on the work carried out.

As possible variants and alternatives, the pumping unit of the invention can also comprise at least one water filtering system 9, in turn connected to at least one booster electric pump 13, connected to the high-pressure pump d.

The high-pressure pump d is connected to the electric motor f by means of a coupling system that transmits the motion.

The electric motor f is controlled by an electrical panel (not illustrated), which includes an inverter in order to be able to vary the revolutions of the high-pressure pump d and therefore its flow rate; the revolutions of the electric motor f are adjusted by the operator according to the pressure value to be adopted and the water consumption to be obtained.

The feed water of the high-pressure pump d is passed through the filter system 9 and is then stored in the accumulation tank 11; the booster pump 13 allows the water to be sent to the inlet of the high-pressure pump d.

The high-pressure pump d is also equipped with a control valve (not shown) which can be actuated either electrically or pneumatically, and the compressor 7, 14 provides the necessary compressed air.

The high-pressure water is sent to the special nozzle 4, specifically designed to generate a low-capacity flow: the air compressor 7, 14 then powers the pneumatic motor (not illustrated) of the rotating head of the nozzle 4. Obviously, the rotating head can have either a symmetrical or asymmetrical nozzle arrangement: in addition, the system also comprises at least one second nozzle equipped with at least one rotating head driven into rotation by the flow of water exiting the first nozzle 4.

As regards its operation, the cleaning system of the present invention is introduced inside the pipeline being cleaned, remotely controlled and monitored by cameras on board the probe.

Further variants include the use of special wheels, shaped to adhere to the walking surfaces, which can vary both in number and shape.

Specifically, a structure entirely made of aeronautical light alloy was designed, while the arrangement of the arms was carefully crafted to keep the wheels close to the duct surface and simultaneously keep the rotating nozzle head centered with respect to the walls. This configuration can vary in number and size, to achieve the same result with ducts of different cross-sections (rectangular, triangular, etc.) and dimensions, without limitations.

The motors that drive the wheels are preferably electric, powered by low voltage that can vary from 10 to 48 Vdc, from a variable switching power supply positioned in the console 15 which, based on the images seen by the cameras 6 located on board, varies the speed of advancement: in this way, the surface being cleaned achieves the correct persistence of the action of the high pressure and low flow rate jets.

Furthermore, the video is recorded from the console 15 and can be viewed at another time or archived as documentation of the work carried out.

The wheels are held in place by a pushing action carried out by a pneumatic piston 8, via the shape of the arms 2, and operated by compressed air, which can also be adjusted near the console 15.

The six cameras located on board are equipped with lighting adjustable from the console 15, one placed in front and one in the rear on the probe (configuration not illustrated).

A flow of compressed air also reaches the probe which, via the ring of nozzles 5, creates an air current that keeps the part of the duct imaged by the front camera 6 clear.

In summary, the invention relates to a cleaning system designed to perform internal cleaning of duct walls, the cleaning system comprising:
- at least one pump unit or pump designed to pump out water or other cleaning fluids;
- at least one electric motor f connected to the pump d for its operation;
- at least one device g for regulating the speed of the pump d, connected to the motor f for its control and for regulating the pump d so that it delivers water at a high pressure, i.e. from 0 to 500 bar, and a low flow rate, i.e. from 2 to 4 l/min;
- at least one nozzle g, 4 equipped with at least one rotating head rotated by the aforementioned fluid;
- at least one air compressor h, 7, 14 capable of supplying compressed air for drives and cleaning;
- a mobile structure 100 designed to support and transport the pump d equipped with the components f, g, 4, h, 7, 14, the mobile structure 100 comprising:
   * a plurality, preferably six, of arms 2 arranged in a pantograph capable of positioning the cleaning jets equidistant from the walls of the ducts, the arms 2 being operatively connected to respective gear wheels 3 driven by respective electric motors 1, a movement of the pantograph with arms 2 being capable of making the gear wheels 3 adhere to the walls.

## Claims

1. Cleaning system designed to clean inside walls of a pipe, said cleaning system comprising:
- at least one pump unit (d) designed to pump out water or other cleaning fluids;
- at least one electric motor (f) connected to said pump (d) for its operation;
- at least one device (g) for regulating a speed of said pump (d), connected to said motor (f) for its control and for regulating said pump (d) so that it delivers water at a high pressure, i.e., from 0 to 500 bar, and a low flow rate, i.e., from 2 to 4 l/min;
- at least one nozzle (g, 4) equipped with at least one rotating head driven by said fluid;
- at least one air compressor (h, 7, 14) capable of providing compressed air for operation and cleaning;
- a mobile structure (100) designed to support and transport said pump (d) equipped with said components (f, g, 4, h, 7, 14), said mobile structure (100) comprising a plurality, preferably six, of arms (2) arranged in a pantograph capable of positioning the cleaning jets equidistant from the walls of the ducts,
**characterized in that** said arms (2) are operatively connected to respective gear wheels (3) driven by respective electric motors (1), a movement of said pantograph arm (2) being capable of making the gear wheels (3) adhere to the walls,
wherein a movement of the pantograph arms (2) occurs via a pneumatic piston (8) operated by compressed air, the adhesion of the gear wheels (3) to the walls of the ducts occurring with a pushing action, carried out by the pneumatic piston (8), via the shape of the arms (2), and operated by compressed air.

2. Cleaning system according to claim 1, further equipped, in its front part with respect to a direction of advancement of said mobile structure (100), with a crown (5) of compressed air jets with the function of pushing the liquid towards its suction/removal.

3. Cleaning system according to claim 1 or 2, further equipped with at least one camera (6) for endoscopic use, with front and back illumination, for real-time recording.

4. Cleaning system according to any of the preceding claims, further equipped with at least one water filtering system (9), in turn connected to at least one booster pump (13), connected to the high-pressure pump (d).
